# EUROPÄISCHE PATENTSCHRIFT

(11) **EP 1 757 652 B1**
(45) Veröffentlichungstag und Bekanntmachung des Hinweises auf die Patenterteilung: **21.05.2008**
(21) Anmeldenummer: 06017015.6
(22) Anmeldetag: 16.08.2006
(51) Int. Cl.: C08J 5/20, C08F 8/12

(54) **Schwachsaure Kationenaustauscher**
Weakly acid cation exchange resin
Resine echangeuse de cations faiblement acide

(30) Priorität: 27.08.2005 DE 102005040625
(43) Veröffentlichungstag der Anmeldung: 28.02.2007
(73) Patentinhaber: LANXESS Deutschland GmbH, 51369 Leverkusen (DE)
(72) Erfinder: Podszun, Wolfgang Dr., 80469 München (DE); Halle, Olaf Dr., 51061 Köln (DE); Klipper, Reinhold Dr., 50933 Köln (DE); Wagner, Rudolf Dr., 51061 Köln (DE); Vanhoorne, Pierre Dr., 40789 Monheim (DE); Zarges, Wolfgang Dr., 51069 Köln (DE)

(56) Entgegenhaltungen:
- EP-A- 0 406 648
- EP-A- 1 486 512
- DE-C- 960 858

## Beschreibung

Gegenstand der vorliegenden Erfindung ist ein Verfahren zur Herstellung schwachsaurer Kationenaustauscher vom Polymethacrylsäure-Typ, sowie deren Anwendungen.

Aus dem Stand der Technik sind bereits perlförmige Kationenaustauscher vom Polymethacrylsäure-Typ bekannt. Es handelt sich dabei um eine Klasse von Kationenaustauschern, die in der Praxis bei zahlreichen unterschiedlichen Anwendungen eingesetzt werden können. Ein wichtiges Einsatzgebiet ist die Wasseraufbereitungstechnik, bei der mehrwertige Kationen wie beispielsweise Calcium, Magnesium, Blei oder Kupfer aber auch die Carbonatanionen entfernt werden können. Ein besonderer Vorteil der Kationenaustauscher auf Methacrylatbasis besteht darin, dass ihre Regeneration nicht nur mit starken Säure, wie Salzsäure oder Schwefelsäure sondern auch mit Kohlendioxid erfolgen kann. Ein weiteres Anwendungsgebiet der Kationenaustauscher vom Polymethacrylsäure-Typ ist die Reinigung und Abtrennung von biologisch wirksamen Komponenten wie z.B. Antibiotika, Enzyme, Peptide und Nukleinsäuren aus deren Lösungen, beispielsweise aus Reaktionsgemischen und aus Fermentationsbrühen.

Für die genannten Anwendungen werden sowohl gelförmige als auch makroporöse Kationenaustauscher vom Polymethacrylsäure-Typ benötigt. Die Begriffe makroporös bzw. gelförmig werden in der Fachliteratur beispielsweise in Seidl, Malinsky, Dusek, Heitz, adv. Polymer Sci., Vol. 5 Seiten 113 bis 213 (1967) eingehend beschrieben.

Die Herstellung der Kationenaustauscher vom Polymethacrylsäure-Typ kann durch die sogenannte inverse Suspensionspolymerisation erfolgen. Bei diesem Verfahren wird eine wässrige Lösung von Methacrylsäure und Vernetzter in einem organischen Lösungsmittel, wie z.B. Cyclohexan, als kontinuierlichen Phase zu kugelförmigen Tröpfchen zerteilt, und diese Tröpfchen bei erhöhter Temperatur unter Anwendung eines Radikalstarters durch Polymerisation ausgehärtet.

Auch lösungsmittelfreie Herstellverfahren, die unter anderem aus ökologischen Gründen vorzuziehen sind, sind bereits bekannt. In diesem Falle wird nicht die Methacrylsäure selbst, sondern ein Alkylester der Methacrylsäure in Kombination mit einem Vernetzer durch Suspensionspolymerisation in Wasser in perlförmiges vernetztes Polyalkylmethacrylat überführt, welches durch nachgeschaltete Verseifung in den Polymethacrylsäure-Kationenaustauscher umgewandelt wird. In der US 2 340 111 werden beispielweise unlösliche Copolymerisate mit Carboxylgruppen für die Entfernung von Kationen aus Wasser beschrieben, wobei die carboxylgruppenhaltigen Copolymerisate durch Verseifung von Acrylestercopolymersaten erzeugt werden können. Die DE 960 858 beschreibt ein Verfahren zur Herstellung von als Kationenaustauscher verwendbaren gelförmigen Polymerisaten durch Suspensionspolymerisation von Estern der Acrylsäure und/oder Methacrylsäure und durch nachfolgende Verseifung der erhaltenen Polymerisate.

Während die Verseifung von Polyacrylalkylesterpolymerisaten zu Polyacrylsäurepolymerisaten recht leicht durch zuführen ist, benötigt die analoge Reaktion mit Methacrylatpolymerisaten wegen der höher Hydrolysestabilität der Methacrylester drastische Reaktionsbedingungen, z.B. Temperaturen von mehr als 150 °C. Diese drastischen Bedingungen sind in der Praxis unerwünscht, da sie einen erhöhten technischen Aufwand erfordern und das erhaltene Reaktionsprodukt infolge der Temperaturbelastung in der Struktur verändern können.

Die Aufgabe der vorliegenden Erfindung ist die Bereitstellung eines einfachen Verfahrens zur Herstellung von gelförmigen und makroporösen Kationenaustauscher vom Polymethacrylsäure-Typ.

Gegenstand der vorliegenden Erfindung und Lösung dieser Aufgabe ist deshalb ein Verfahren zur Herstellung von Kationenaustauschern vom Polymethacrylsäure-Typ welches dadurch gekennzeichnet ist, dass man
a) ein Monomergemisch aus Methacrylsäurealkylester, Methacrylsäure, Vernetzer, Radikalstarter und ggf. Porogen durch Suspensionspolymerisation in wässriger Phase zu einem Perlpolymerisat aushärtet und
b) das erhaltene Perlpolymerisat bei einer Temperatur von 100 - 160 °C alkalisch verseift.

Die im Verfahrensschritt a) eingesetzten Methacrylsäurealkylester sind Ester mit verzweigten und unverzweigten C1 bis C6-Alkylresten. Beispielhaft seien genannt:

Methylmethacrylat, Etylmethacrylat, n-Propylmethacrylat und Isopropylmethacrylat. Methylmethacrylat ist bevorzugt.

Geeignete Vernetzer im Sinne der vorliegenden Erfindung sind multifunktionelle ethylenisch ungesättigte Verbindungen wie beispielsweise Butadien, Isopren, Divinylbenzol, Divinyltoluol, Trivinylbenzol, Divinylnaphtalin, Trivinylnaphtalin, Divinylcyclohexan, Trivinylcyclohexan, Triallycyanurat, Triallylamin, 1,7-Octadien, 1,5-Hexadien, Cyclopentadien, Norbornadien, Diethylenglykoldivinylether, Triethylenglykoldivinylether, Tetraethylenglykoldivinylether, Butandioldivinylether, Ethylenglycoldivinylether, Cyclohexandimethanoldivinylether, Hexandioldivinylether und Trimethylolpropantrivinylether.

Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend. Es können auch Mischungen unterschiedlicher Vernetzer, z.B. Mischungen aus Divinylbenzol und Divinylether eingesetzt werden.

Der Anteil des Vernetzers am Monomergemisch beträgt 2 bis 50 Gew.-%, bevorzugt 4 bis 25 Gew.-%.

Neben Methacrylsäurealkylester, Methacrylsäure und Vernetzer können in Anteilen von bis zu 20 Gew.-%, vorzugweise bis zu 10 Gew.-% weitere radikalisch polymerisierbare Monomere im Monomergemisch enthalten sein. Geeignet sind beispielsweise Styrol, Vinylacetat, Acrylnitril und Acrylsäurealkylester.

Für das erfindungsgemäße Verfahren geeignete Initiatoren sind beispielsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azobis(isobutyronitril) oder 2,2'-Azobis(2-methylisobutyronitril).

Die Initiatoren werden im Allgemeinen in Mengen von 0,05 bis 2,5 Gew.-%, vorzugsweise 0,1 bis 1,5 Gew.-%, bezogen auf das Monomergemisch angewendet.

Um im erfindungsgemäßen Kationenaustauscher vom Polymethacrylsäure-Typ eine makroporöse Struktur zu erzeugen, werden dem Monomergemisch sogenannte Porogene zugesetzt. Hierfür sind organische Lösungsmittel geeignet, die mit dem Monomeren mischbar sind. Beispielhaft seien Hexan, Cyclohexan, Octan, Isooctan, Isododecan, Methylethylketon, Methylisobutylketon, Butanol oder Octanol und deren Isomeren genannt. Porogene werden auch in den Patentschriften DE 1 045 102, DE 1 113 570 und US 4 382 124 beschrieben. Der Anteil an Porogen liegt bei 5 bis 70 Gew.-%, bevorzugt bei 10 bis 65 Gew.-%, bezogen auf das Monomergemisch.

Das Monomergemisch wird im Verfahrensschritt a) durch Suspensionspolymerisation in wässriger Phase zu einem Perlpolymerisat ausgehärtet.

Dabei erfolgt die Suspensionspolymerisation in der Regel in Anwesenheit eines in der wässrigen Phase gelösten Schutzkolloide. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Sehr gut geeignet sind auch Cellulosederivate, insbesondere Celluloseester und Celluloseether, wie Methylcellulose, Carboxymethylcellulose, Methylhydroxyethylcellulose, Methylhydroxypropylcellulose und Hydroxyethylcellulose. Die Einsatzmenge der Schutzkolloide beträgt im Allgemeinen 0,05 bis 1 Gew.-% bezogen auf die wässrige Phase, vorzugsweise 0,05 bis 0,5 Gew.-%.

Die im Verfahrensschritt a) verwendete wässrige Phase kann optional zusätzlich ein Puffersystem enthalten. Bevorzugt werden Puffersysteme, die den pH-Wert der wässrigen Phase bei Beginn der

Polymerisation auf einen Wert zwischen 14 und 6, vorzugsweise zwischen 13 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt 0,5 bis 500 mmol/l, vorzugsweise 2,5 bis 100 mmol/l.

Auch der Zusatz von Salzen, wie z.B. Natriumchlorid oder Natriumsulfat zur wässrigen Phase ist im Rahmen des erfindungsgemäßen Verfahrens möglich. Durch einen Salzgehalt von beispielweise 5 bis 10 Gew.-% kann die Löslichkeit der Methacrylsäure in der wässrigen Phase herabgesetzt werden.

Die wässrige Phase kann darüber hinaus einen gelösten Polymerisationsinhibitor enthalten. Es wurde gefunden, dass die Zugabe eines wasserlöslichen Polymerisationsinhibitor die Bildung von unerwünschtem Feinpolymerisat in der Wasserphase wirksam unterdrückt. Als Inhibitoren kommen in diesem Zusammenhang sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Chromate wie Natriumdichromat, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid oder Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol oder Kondensationsprodukte aus Phenolen mit Aldehyden. Die Konzentration des Inhibitors beträgt 5 bis 1000 ppm (bezogen auf die wässrige Phase), vorzugsweise 10 bis 500 ppm, besonders bevorzugt 10 bis 250 ppm.

Die Teilchengröße des im Verfahrensschritt a) gebildeten Perlpolymerisates läst sich mit Hilfe der Rührgeschwindigkeit einstellen. In Laborreaktoren mit 3 bis 5 Liter Reaktionsvolumen werden im Allgemeinen Rührgeschwindigkeiten von 100 bis 300 Umdrehungen/Min angewendet. Es können verschiedene Rührertypen eingesetzt werden. Besonders geeignet sind Gitterrührer und Balkenrührer. Unter den genannten Bedingungen werden im Allgemeinen Perlpolymerisate mit einer mittleren Teilchengröße von ca. 200 bis 750 µm erhalten.

Das Volumenverhältnis von Monomergemisch zu wässriger Phase beträgt 1 : 0,75 bis 1 : 6, vorzugsweise 1 : 1 bis 1 : 2,5.

Die Polymerisationstemperatur richtet sich nach der Zerfallstemperatur des eingesetzten Initiators. Sie liegt im Allgemeinen zwischen 50 bis 180°C, vorzugsweise zwischen 55 und 130 °C. Die Polymerisation dauert 1 bis einige Stunden. Es hat sich bewährt, ein Temperaturprogramm anzuwenden, bei dem die Polymerisation bei niedriger Temperatur, beispielsweise 60 °C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Sofern bei der Polymerisation ein Porogen eingesetzt wurde, wird dieses zweckmäßiger Weise im Anschluss an die Polymerisation durch Destillation aus dem Reaktionsgemisch entfernt. Danach kann das Polymerisat mit üblichen Methoden, beispielsweise durch Filtrieren oder Dekantieren, isoliert und gegebenenfalls gewaschen und getrocknet werden.

Im Verfahrensschritt b) des erfindungsgemäßen Verfahrens erfolgt die Verseifung bzw. Hydrolyse des Perlpolymerisates aus Verfahrensschritt a).

Geeignete Hydrolysemittel sind dabei Lösungen starker Basen wie z. B. Kaliumhydroxid oder Natriumhydroxid. Die Konzentration der starken Base beträgt im Allgemeinen 5 bis 50 Gew.-%. Es können rein wässrige Lösungen starker Basen verwendet werden. Es ist jedoch auch möglich und in Hinblick auf möglichst kurze Verseifungszeiten günstig, alkoholhaltige wässrige Lösungen einzusetzen. Als Alkohole sind z.B. Methanol, Ethanol, n-Propanol und i-Propanol gut geeignet. Der Anteil an Alkohol im Hydrolysemittel kann dabei 10 bis 60 Gew.-% betragen.

Die Menge an Hydrolysemittel wird so gewählt, dass die Mischung aus Perlpolymerisat und Hydrolysemittel gut rührbar ist. Im Allgemeinen werden 700 ml bis 2000 ml Hydrolysemittel pro Kg Perlpolymerisat verwendet.

Die Hydrolyse erfolgt bevorzugt bei Temperaturen von 90 °C bis 160 °C, besonders bevorzugt 100 °C bis 150 °C. Die Dauer der Verseifung beträgt bevorzugt 1 bis 24 h, besonders bevorzugt 4 bis 12 h.

Nach der Verseifung wird das Reaktionsgemisch aus Hydrolyseprodukt und restlichem Hydrolysemittel auf Raumtemperatur abgekühlt und zunächst mit Wasser verdünnt und gewaschen.

Bei Verwendung von Natronlauge als Hydrolysemittel fällt der schwachsaure Kationenaustauscher in der Natrium-Form an. Für manche Anwendungen ist es günstig, den Kationenaustauscher von der Natrium-Form in die saure Form zu überführen. Diese Umladung erfolgt mit Schwefelsäure einer Konzentration von 5 bis 50 %, vorzugsweise 10 bis 20 %.

Falls gewünscht kann der erfindungsgemäß erhaltene schwachsaure Kationenaustauscher zur Reinigung mit entionisiertem Wasser bei Temperaturen von 70 bis 145 °C, vorzugsweise von 105 bis 130 °C behandelt werden.

Gegenstand der vorliegenden Erfindung sind auch die schwachsaure Kationenaustauscher vom Polymethacrylsäure-Typ erhältlich durch
a) Aushärten eines Monomergemisches aus Methacrylsäurealkylester, Methacrylsäure, Vernetzer, Radikalstarter und ggf. Porogen durch Suspensionspolymerisation in wässriger Phase und
b) alkalischer Verseifung des erhaltenen Perlpolymerisat bei einer Temperatur von 100 - 160°C.

Die vorliegende Erfindung betrifft auch die Verwendung der erfindungsgemäßen schwachsauren Kationenautauscher vom Polymethacrylsäure-Typ
- zur Entfernung von Kationen, Farbpartikeln oder organischen Komponenten aus wässrigen oder organischen Lösungen,
- zur Enthärtung im Neutralaustausch von wässrigen oder organischen Lösungen,
- zur Reinigung und Aufarbeitung von Wässern der chemischen Industrie, der ElektronikIndustrie und aus Kraftwerken,
- Zur Abtrennung und Reinigung von biologisch wirksamen Komponenten wie z.B. Antibiotika, Enzyme, Peptide und Nukleinsäuren aus deren Lösungen, beispielsweise aus Reaktionsgemischen und aus Fermentationsbrühen,

Weiterhin können die erfindungsgemäßen Kationenaustauscher in Kombination mit gelförmigen und/oder makroporösen Anionenaustauschern zur Vollentsalzung wässriger Lösungen und/oder Kondensaten, insbesondere in der Trinkwasseraufbereitung, eingesetzt werden.

### Beispiel 1

### Herstellung eines makroporösen schwachsaurer Kationenaustauscher vom Polymethacrylsäure-Typ

### a) Herstellung eines makroporösen Perlpolymerisates

In einem 4 1 Glasreaktor werden 6,8 g Methylcellulose (Tylose MH 1008) in 1.856 ml entionisiertes Wasser gelöst. Zu dieser Vorlage wird ein Monomergemisch bestehend aus 237,5 g Methylmethacrylat, 113,7 g Methacrylsäure, 103,6 g Divinylbenzol (81,2 % iges Divinylbenzol-Isomerengemisch in Ethylstyrol), 6,8 g Dibenzoylperoxid (75 % iges wasserfeuchtes Produkt) und 682,2 g Isobutylmethylketon (99 % ig) unter die Oberfläche der w-Phase eingetragen. Die Rührgeschwindigkeit wird auf 175 UPM eingestellt und unter Rühren 10 h auf 80 °C erhitzt. Anschließend wird 10h bei 88 °C nachgerührt. Nach dem Abkühlen gibt man 31,6 g Dinatriumhydrogenphosphat hinzu. Der Ansatz wird gewaschen, indem man ihn 30 min stehen lässt und die Mutterlauge absaugt, anschließend mit entionisiertemWasser 30 min verrührt und die w-Phase erneut absaugt. Diese Prozedur wird viermal wiederholt. Zur Destillation von Isobutylmethylketon wird ein Verhältnis Produkt : Wasser gleich 1 : 1 gestellt. Dann wird langsam auf 90 - 92 °C geheizt und Isobutylmethylketon abdestilliert. Das Perlpolymerisat wird in mehreren Portionen über ein 630 µm - und ein 350 µm - Sieb gewaschen.

Man erhält 453 g Perlpolymerisat mit einer mittleren Teilchengröße von 467 µm.

### b) Verseifung des Perlpolymerisates

In einem 6 1 Autoklav werden 286g Polymerisat aus Beispiel a), 728,8 mL Natronlauge (50 gew.-%ig) und 71 mL entionisiertes Wasser eingefüllt.

Der Ansatz wird auf 100 °C geheizt und 30 min bei dieser Temperatur gerührt. Der Autoklav wird nun verschlossen und langsam auf 145 °C aufgeheizt. Der Innendruck steigt dabei auf 3,5 bar. Es wird 12 h bei 145 °C verseift. Das erhaltene Harz wird in eine 00 - Glasfrittensäule überführt, dann bis pH 8 gewaschen. Anschließend werden 44,8 mL Schwefelsäuremonohydrat zugesetzt und das Produkt durch Lufteinleiten verwirbelt. Dann lässt man soviel w-Phase ab, dass das Harz noch in Lsg steht und wäscht neutral bis pH 5. Man erhält 1085 mL Methacrylat-Harz in der H - Form mit einem Totalkapizität von 1,65 mol/L und einer mittleren Teilchengröße von 500 µm.

### Beispiel 2

### Herstellung eines makroporösen schwachsaurer Kationenaustauscher vom Polymethacrylsäure-Typ

Beispiel 1 wurde wiederholt, wobei ein Monomergemisch bestehend aus 300,1 g Methylmethacrylat, 45,5 g Methacrylsäure, 109,2 g Divinylbenzol (81,2 %-iges Divinylbenzol-Isomerengemisch in Ethylstyrol), 6,8 g Dibenzoylperoxid (75 %-iges wasserfeuchtes Produkt) und 682,2 g Isobutylmethylketon (99 % ig) eingesetzt wurde. Man erhielt 443g Perlpolymerisat mit einer mittleren Teilchengröße von 380 µm. Die alkalische Verseifung ergab ein Methacrylat-Harz in der H-Form mit einer Totalkapazität von 1,50 mol/l und einer mittleren Teilchengröße von 454 µm.

### Beispiel 3

### Herstellung eines gelförmigen schwachsaurer Kationenaustauscher vom Polymethacrylsäure-Typ

### a) Herstellung eines gelförmigen Perlpolymerisates

In einem 4 l Glasreaktor werden 1.311 ml entionisiertes Wasser vorgelegt. Hierin werden 324,6 g Natriumchlorid und 1,953 g Hydroxyethylcellulose (Tylose H 4000 P) innerhalb gelöst. Danach wird ein Monomergemisch bestehend aus 688,4 g Methylmethacrylat, 250,0 g Methacrylsäure, 61,6 g Divinylbenzol (81,2 %iges Divinylbenzol-Isomerengemisch in Ethylstyrol) und 6,0 g Dibenzoylperoxid (75 % ig) unter die Oberfläche der w-Phase eingetragen. Unter Rühren mit 160 UPM wird in 1,5 h auf 63 °C geheizt. Nach 2 h 30 min wird die Temperatur auf 94 °C erhöht und weitere 3 h bei dieser Temperatur gehalten. Nach dem Abkühlen wird das Perlpolymerisat gründlich über einem 100 µm - Sieb gewaschen. Man erhält 949g transparentes Perlpolymerisat mit einer mittleren Teilchengröße von 497 µm.

### b) Verseifung des Perlpolymerisates

In einem 6 1 Autoklav werden 672,3 g Perlpolymerisat aus a), 694,9 mL Natronlauge (50 % ig) und 355 mL VE-Wasser vorgelegt. As Gemisch wird auf 100 °C geheizt und 30 min bei dieser Temperatur gerührt. Der Autoklav wird nun verschlossen und langsam auf 145 °C aufgeheizt. Der Innendruck steigt dabei auf 3,5 bar. Es wird 12 h bei 145 °C verseift. Das erhaltene Harz wird in eine 00 - Glasfrittensäule überführt und solange mit entionisierten Wasser gewaschen, bis der Ablauf einem pH von 8 aufweist.

Man erhält 1270 mL gelförmiges Methacrylatharz mit einer mittleren Teilchengröße von 511 µm und einer Totalkapazität von 4,05 mol/L.

### Untersuchungsmethoden

### Bestimmung der Totalkapazität des Harzes

In einem 100 ml Messzylinder werden unter voll entsalztem Wasser auf einem Vibriertisch 55 ml schwachsaurer Kationenaustauscher eingerüttelt und in ein Filterrohr gespült. 300 ml 15 %-ige Salzsäure werden innerhalb von 60 Minuten hinzudosiert. Anschließend wird mit entionisertem Wasser gewaschen, bis das Eluat neutral ist. Von dem Harz werden 50 ml eingerüttelt und in ein Filterrohr gespült. 600 ml 1 normale Natronlauge werden innerhalb von 60 Minuten hinzudosiert und das Eluat wird in einem 1 Liter Erlenmeyerkolben aufgefangen. Das Harz wird mit 200 ml entionisertes Wasser gewaschen, wobei das Eluat ebenfalls in dem 1 Liter Erlenmeyerkolben aufgefangen wird. Der Erlenmeyerkolben wird mit vollentsalztem Wasser bis zur Marke aufgefüllt und gemischt. 50 ml Lösung werden in einem Becherglas mit 50 ml vollentsalztem Wasser verdünnt und unter Verwendung einer pH-Elektrode mit 0,1 n Salzsäure bis pH 4,3 titriert.
Totalkapazität (TK): die Totalkapazität ist ein Maß für die Menge an saure Gruppen im Harz.
Dimension : mol saure Gruppen pro Liter Harz
Errechnung der TK: (30 - Verbrauch) / 2,5 = mol/Liter Harz in der sauren Form

## Patentansprüche

1. Verfahren zur Herstellung schwachsaurer Kationenaustauscher vom Polymethacrylsäure-Typ **dadurch gekennzeichnet, dass** man
a) ein Monomergemisch aus Methacrylsäurealkylester, Methacrylsäure, Vernetzer, Radikalstarter und ggf. Porogen durch Suspensionspolymerisation in wässriger Phase zu einem Perlpolymerisat aushärtet und
b) das erhaltene Perlpolymerisat bei einer Temperatur von 100 - 160 °C alkalisch verseift.

2. Verfahren gemäß Anspruch 1 , **dadurch gekennzeichnet, dass** im Verfahrensschritt a) ein Monomergemisch aus Methylmethacrylat, Methacrylsäure, Vernetzer, Radikalstarter und ggf. Porogen eingesetzt wird.

3. Verfahren gemäß Anspruch 2, **dadurch gekennzeichnet, dass** das im Verfahrensschritt a) eingesetzte Monomergemisch 10 bis 35 Gew% Methacrylsäure bezogen auf die Summe von Methylmethacrylat, Methacrylsäure und Vernetzer enthält.

4. Verfahren gemäß der Ansprüche 1 bis 3, **dadurch gekennzeichnet, dass** das im Verfahrensschritt a) eingesetzte Monomergemisch 5 bis 70 Gew.-% , bevorzugt 10-65 Gew.-% Porogen bezogen auf die Summe von Methylmetacrylat, Methacrylsäure und Vernetzer enthält.

5. Verfahren gemäß der Ansprüche 1 bis 4, **dadurch gekennzeichnet, dass** der Vernetzer Divinylbenzol, Trivinylbenzol, Ethylenglykoldivinylether, Diethylenglykoldivinylether, Triethylenglykoldivinylether, Butandioldivinylether, Hexandioldivinylether, Cyclohexandimethanoldivinylether, Trimethylolpropantrivinylether oder ein Gemisch der genannten Verbindungen ist.

6. Verfahren gemäß der Ansprüche 1 bis 5, **dadurch gekennzeichnet dass** das Porogen Methyisobutylketon, Hexan, Cyclohexan, Octan, Isooctan, Isododecan, n-Butanol, 2-Butanol, Isobutanol, t-Butanol, Octanol oder ein Gemisch der genannten Verbindungen ist.

7. Schwachsaure Kationenaustauscher vom Polymethacrylsäure-Typ erhältlich durch
a) Aushärten eines Monomergemisches aus Methacrylsäurealkylester, Methacrylsäure, Vernetzer, Radikalstarter und ggf. Porogen durch Suspensionspolymerisation in wässriger Phase und
b) alkalischer Verseifung des erhaltenen Perlpolymerisat bei einer Temperatur von 100 - 160 °C

8. Verwendung der schwachsauren Kationenaustauscher vom Polymethacrylsäure-Typ gemäß Anspruch 7
- zur Entfernung von Kationen, Farbpartikeln oder organischen Komponenten aus wässrigen oder organischen Lösungen,
- zur Enthärtung im Neutralaustausch von wässrigen oder organischen Lösungen,
- zur Reinigung und Aufarbeitung von Wässern der chemischen Industrie, der Elektronik-Industrie und aus Kraftwerken,
- zur Entfärbung und Entsalzung von Molken, Gelatinedünnbrühen, Fruchtsäften, Fruchtmosten und wässrigen Lösungen von Zuckern,
- Zur Abtrennung und Reinigung von biologisch wirksamen Komponenten wie z.B. Antibiotika, Enzyme, Peptide und Nukleinsäuren aus deren Lösungen, beispielsweise aus Reaktionsgemischen und aus Fermentationsbrühen.

## Claims

1. Process for producing weakly acidic cation exchangers of the polymethacrylic acid type **characterized in that**
a) a monomer mixture of methacrylic acid alkyl ester, methacrylic acid, crosslinker, free-radical initiator and if appropriate porogen is cured by suspension polymerization in aqueous phase to give a bead polymer and
b) the resultant bead polymer is saponified under alkaline conditions at a temperature of 100-160°C.

2. Process according to Claim 1, **characterized in that**, in process step a), use is made of a monomer mixture of methyl methacrylate, methacrylic acid, crosslinker, free-radical initiator and if appropriate porogen.

3. Process according to Claim 2, **characterized in that** the monomer mixture used in process step a) contains 10 to 35% by weight of methacrylic acid based on the sum of methyl methacrylate, methacrylic acid and crosslinker.

4. Process according to Claims 1 to 3, **characterized in that** the monomer mixture used in process step a) contains 5 to 70% by weight and preferably 10 to 65% by weight of porogen based on the sum of methyl methacrylate, methacrylic acid and crosslinker.

5. Process according to Claims 1 to 4, **characterized in that** the crosslinker is divinylbenzene, trivinylbenzene, ethylene glycol divinyl ether, diethylene glycol divinyl ether, triethylene glycol divinyl ether, butanediol divinyl ether, hexanediol divinyl ether, cyclohexanedimethanol divinyl ether, trimethylolpropane trivinyl ether or a mixture of the said compounds.

6. Process according to Claims 1 to 5, **characterized in that** the porogen is methyl isobutyl ketone, hexane, cyclohexane, octane, isooctane, isododecane, n-butanol, 2-butanol, isobutanol, tert-butanol, octanol or a mixture of the said compounds.

7. Weakly acidic cation exchangers of the polymethacrylic acid type obtainable by
a) curing a monomer mixture of methacrylic acid alkyl ester, methacrylic acid, crosslinker, free-radical initiator and if appropriate porogen by suspension polymerization in aqueous phase and
b) alkaline saponification of the resultant bead polymer at a temperature of 100-160°C

8. Use of the weakly acidic cation exchangers of the polymethacrylic acid type according to Claim 7
- for removing cations, colour particles or organic components from aqueous or organic solutions,
- for softening in neutral exchange of aqueous or organic solutions,
- for purification and work-up of waters of the chemical industry, the electronics industry and power stations,
- for decolourizing and desalting wheys, thin gelatin broths, fruit juices, fruit musts and aqueous solutions of sugars,
- for separating off and purifying biologically active components, such as, for example, antibiotics, enzymes, peptides and nucleic acids from their solutions, for example from reaction mixtures and from fermentation broths.

## Revendications

1. Procédé pour la préparation d'échangeurs de cations faiblement acides du type poly(acide méthacrylique), **caractérisé en ce que**
a) on fait durcir un mélange de monomères constitué de méthacrylate d'alkyle, acide méthacrylique, agent de réticulation, amorceur de radicaux et éventuellement agent porogène, par polymérisation en suspension en phase aqueuse, pour obtenir un produit de polymérisation en perles et
b) on saponifie par voie alcaline le produit de polymérisation en perles obtenu, à une température de 100-160 °C.

2. Procédé selon la revendication 1, **caractérisé en ce que** dans l'étape a) du procédé on utilise un mélange de monomères constitué de méthacrylate de méthyle, acide méthacrylique, agent de réticulation, amorceur de radicaux et éventuellement agent porogène.

3. Procédé selon la revendication 2, **caractérisé en ce que** le mélange de monomères utilisé dans l'étape a) du procédé contient de 10 à 35 % en poids d'acide méthacrylique, par rapport à la somme de méthacrylate de méthyle, acide méthacrylique et agent de réticulation.

4. Procédé selon les revendications 1 à 3, **caractérisé en ce que** le mélange de monomères utilisé dans l'étape a) du procédé contient de 5 à 70 % en poids, de préférence de 10 à 65 % en poids d'agent porogène, par rapport à la somme de méthacrylate de méthyle, acide méthacrylique et agent de réticulation.

5. Procédé selon les revendications 1 à 4, **caractérisé en ce que** l'agent de réticulation est le divinylbenzène, le trivinylbenzène, l'éther divinylique d'éthylèneglycol, l'éther divinylique de diéthylèneglycol, l'éther divinylique de triéthylèneglycol, l'éther divinylique de butanediol, l'éther divinylique d'hexanediol, l'éther divinylique de cyclohexanediméthanol, l'éther trivinylique de triméthylolpropane ou un mélange des composés cités.

6. Procédé selon les revendications 1 à 5, **caractérisé en ce que** l'agent porogène est la méthylisobutylcétone, l'hexane, le cyclohexane, l'octane, l'iso-octane, l'isododécane, le n-butanol, le 2-butanol, l'isobutanol, le tert-butanol, l'octanol ou un mélange des composés cités.

7. Echangeurs de cations faiblement acides du type poly(acide méthacrylique), pouvant être obtenus par
a) durcissement d'un mélange de monomères constitué de méthacrylate d'alkyle, acide méthacrylique, agent de réticulation, amorceur de radicaux et éventuellement agent porogène, par polymérisation en suspension en phase aqueuse, et
b) saponification alcaline du produit de polymérisation en perles obtenu, à une température de 100-160 °C.

8. Utilisation des échangeurs de cations faiblement acides du type poly(acide méthacrylique) selon la revendication 7
- pour l'élimination de cations, de particules colorées ou de composants organiques à partir de solutions aqueuses ou organiques,
- pour l'adoucissement et l'échange neutre de solutions aqueuses ou organiques,
- pour la purification et le traitement d'eaux de l'industrie chimique, de l'industrie de l'électronique, et de centrales électriques,
- pour la décoloration et l'élimination des sels de lactosérum, bouillons fluides de gélatine, jus de fruits, moûts de fruits et solutions aqueuses de sucres,
- pour la séparation et la purification de composants biologiquement actifs, comme par exemple des antibiotiques, des enzymes, des peptides et des acides nucléiques à partir de leurs solutions, par exemple de mélanges réactionnels et de bouillons de fermentation.
